# EUROPEAN PATENT APPLICATION

(11) **EP 4 570 149 A1**
(43) Date of publication of application: **18.06.2025**
(21) Application number: 24219836.4
(22) Date of filing: 13.12.2024
(51) Int. Cl.: A47J 45/07

(54) **COOKWARE WITH REMOVABLE HANDLE**

(30) Priority: 13.12.2023 US 202363609674 P
(71) Applicant: Fiskars Brands, Inc., Middleton, WI 53562 (US)
(72) Inventor: BESSAC, Grant, Beaverton 97008 (US); GIBB, Shawn, Portland 97220 (US)
(74) Representative: Gill Jennings & Every LLP

(57) **Abstract**

Cookware includes a cooking vessel, a bracket, and a handle. The bracket includes a bracket body coupled to the bracket body and extending away from the cooking vessel, the bridge defining a slot. The handle is removably coupled to the bracket and includes a handle body and a release tab. The release tab is coupled to the handle body and configured to move between a secure position and a release position, wherein moving the release tab to the release position causes the release tab to disengage the bridge to decouple the handle from the bracket. The handle can couple to a plurality of various cooking vessels. The handle can include an alignment tab coupled to the handle body and configured to slide within the slot.

## Description

### CROSS-REFENCE TO RELATED PATENT APPLICATIONS

This application claims the benefit of and priority to U.S. Provisional Application No. 63/609,674 filed December 13, 2023.

### TECHNICAL FIELD

The present disclosure relates generally to camping cookware. More specifically, the present disclosure relates to camping cookware with a vessel and a removable handle.

### BACKGROUND

Camping cookware often include a cooking vessel with a handle that lets a user interact with or carry the cooking vessel. The handle protrudes from the cooking vessel and may cause difficulties when packing or carrying the camping cookware. Individual cooking vessels can also each have their own handle, even though in use handles are generally used one at a time, such that unused handles are unnecessary and may add extra weight and cost to the camping cookware. It would be beneficial to provide a removeable handle that can be used with multiple cooking vessels.

### SUMMARY

One embodiment of the invention relates to cookware. The cookware includes a cooking vessel and a bracket coupled to the cooking vessel. The bracket includes a bracket body and a bridge coupled to the bracket body and extending away from the cooking vessel, the bracket defining a slot. The cookware further includes a handle removably coupled to the bracket. The handle includes a handle body and a release tab coupled to the handle body and configured to move between a secure position and a release position, wherein moving the release tab to the release position causes the release tab to disengage the bridge to decouple the handle from the bracket.

The cooking vessel may be at least one of a pot, a pan, or a griddle.

The bridge may further comprise an upper extension and a lower extension, preferably wherein moving the release tab between the secure position to the release position causes the release tab to disengage the upper extension to decouple the handle from the bracket.

The release tab may further comprise a catch to receive the bridge in the secure position.

The handle may further comprise an alignment tab coupled to the handle body adjacent the release tab. In the secure position the bridge may be positioned between the alignment tab and the release tab. The alignment tab may engage with the bridge to position the bridge within a catch of the release tab. Moving the release tab to the release position may comprise moving the release tab relative to the alignment tab remove the bridge from the catch to decouple the handle from the bracket.

Another embodiment of the invention relates to a removable handle for use with cookware. The removable handle includes a bracket including a bracket body and a bridge extending away from the bracket body and defining a slot. The removable handle includes a handle body, a release tab including a catch and movable relative to the handle body between a secure position and a release position, and an alignment tab extending across the catch. In the secure position the alignment tab extends through the slot such that the bridge is positioned between the alignment tab and the release tab and the bridge engages with the catch to couple the handle to the bracket, and in a release position the catch disengages the bridge to decouple the handle from the bracket.

The handle may be removably coupled to the bracket.

The bridge may further comprise an upper extension and a lower extension, preferably wherein moving the release tab between the secure position to the release position causes the catch to disengage the upper extension to decouple the handle from the bracket.

A span of the bridge may be substantially cross-shaped and the catch may be substantially cross-shaped to receive the span.

The release tab may elastically deform to move between the secure position and the release position.

The alignment tab may have a first stiffness and the release tab may have a second stiffness less than the first stiffness.

The bracket body may comprise a first half and a second half, the bridge preferably extending between the first half and the second half.

The bracket body may further comprise: a first end opposite a second end; and a middle section extending between the first end and the second end and protruding out away from the first end and the second end, preferably wherein the bridge extends within the middle section.

Another embodiment of the invention relates to a cookware kit comprising a plurality of cooking vessels and a plurality of brackets, wherein each of the plurality of brackets is coupled to one of the plurality of cooking vessels. Each bracket includes a bracket body and a bridge extending away from the vessel and defining a slot. The cookware kit further includes a handle including a handle body and a release tab including a catch and movable relative to the handle body between a secure position and a release position, and an alignment tab extending across the catch. In the secure position the alignment tab extends through the slot such that the bridge is positioned between the alignment tab and the release tab and the bridge engages with the catch to couple the handle to the bracket, and in the release position the catch disengages the bridge to decouple the handle from the bracket.

The bridge may further comprise an upper extension and a lower extension, preferably wherein moving the release tab between the secure position to the release position causes the catch to disengage the upper extension to decouple the handle from the bracket.

The release tab may elastically deform to move between the secure position and the release position.

The plurality of cooking vessels may comprise at least two of a pot, a pan, or a griddle.

### BRIEF DESCRIPTION OF THE FIGURES

The invention will become more fully understood from the following detailed description, taken in conjunction with the accompanying drawings, in which:
FIG. 1 is a perspective view of cookware including a cooking vessel and a removable handle, according to an exemplary embodiment.
FIG. 2 is a perspective view of the cookware of FIG. 1 with the removable handle detached from the cooking vessel.
FIG. 3 is a perspective view of various cooking vessels compatible with the removable handle of FIG. 1.
FIG. 4 is an exploded view of the removable handle of FIG. 1.
FIG. 5 is a perspective view of a bracket of the removable handle of FIG. 1.
FIG. 6 is a perspective view of a handle of the removable handle of FIG. 1.
FIG. 7 is an enlarged view of a front of the handle of FIG. 6.
FIG. 8 is an enlarged view of a back of the handle of FIG. 6.
FIG. 9 is an exploded view of the handle of FIG. 6.
FIGS. 10-13 are perspective views illustrating attachment of the handle to the bracket of the removable handle of FIG. 1.
FIGS. 14-17 are perspective views illustrating detachment of the handle from the bracket of the removable handle of FIG. 1.

### DETAILED DESCRIPTION

Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

Cookware includes a cooking vessel and a removable handle is configured to selectively couple to a vessel to allow a user to attach and detach the handle as desired. According to various exemplary embodiments, the removable handle includes a bracket and a handle. The bracket is coupled to the vessel. In some embodiments, a plurality of brackets are coupled to a plurality of vessels such that a single handle can couple to the plurality of vessels independently. The bracket includes a bracket body and a bridge extending away from the bracket body and to define a slot. The bridge can include an upper extension and a lower extension. The upper extension and the lower extension of the bridge can form a substantially cross-shaped perimeter. The handle includes a handle body and a release tab coupled to the handle body. The release tab includes an aperture or catch of substantially the same shape as the bridge, such that the bridge can be received within the catch. The handle can include an alignment tab adjacent to the release tab. The alignment tab can be inserted into the slot of the bracket to align the handle with the bracket.

According to various exemplary embodiments, the handle is coupled to the bracket by inserting the alignment tab into the slot and passing the bridge between the alignment and the release tab. The position of the alignment tab within the slot causes the bridge to engage the release tab. The release tab moves or flexes away from the alignment tab due to contact with the bridge to allow the bridge to pass between the alignment tab and the release tab. As the bridge passes between the alignment tab and the release tab, the bridge is received within the catch of the release tab. The catch allows the foremost portions of the bridge to pass through the release tab, and engages with at least a portion of a perimeter of the bridge to couple the handle to the bracket. As the bridge is received within the catch, the release tab moves or flexes back towards the alignment tab into a secure position, such that all sides of the bridge are retained within the catch of the release tab.

According to various exemplary embodiments, the handle is decoupled from the bracket by moving or flexing the release tab from the secure position to a release position. The release tab acts as a lever and is curved to facilitate a moment arm effect, such that a force downward on a top of the release arm causes the release arm to move outwardly away from the alignment tab. As the release tab moves outward, the catch of the release tab disengages with a top of the bridge, such that downward movement of the handle causes the bridge to slide upwards back through the alignment tab and the release tab, and similarly causes the alignment tab to slide out from the slot. The handle is thereafter decoupled from the bracket.

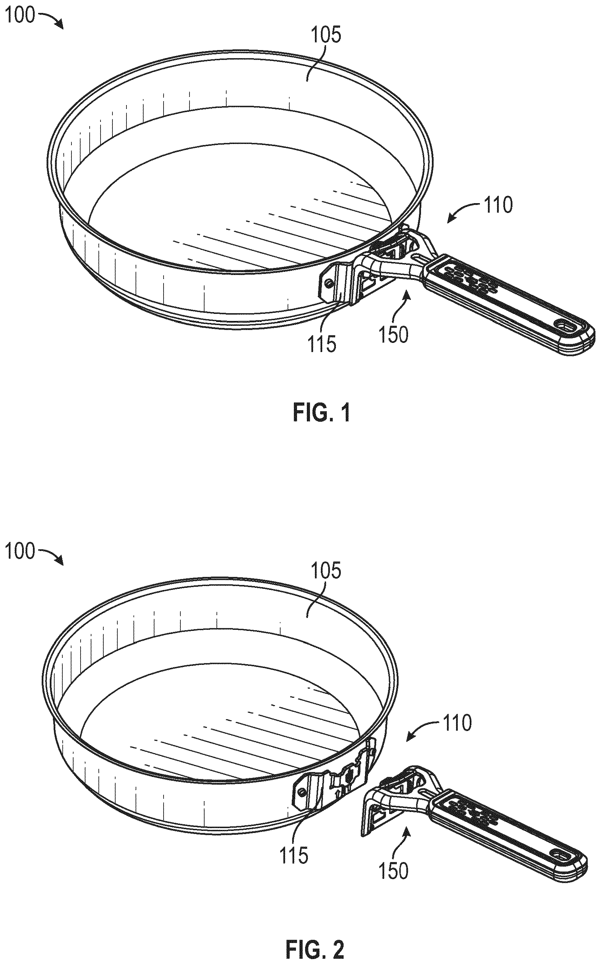

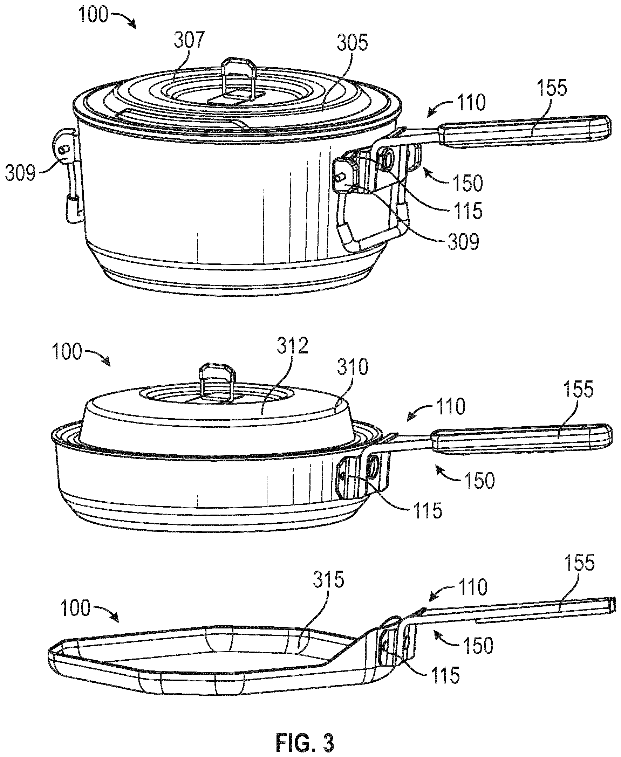

Referring now to FIGS. 1 and 2, a cooking assembly, referred to as cookware 100, is shown according to an exemplary embodiment. The cookware 100 includes a vessel 105. The vessel 105 is a cooking vessel. In some embodiments, the vessel 105 is another type of vessel such as a drinking vessel or a liquid or food storage vessel. The vessel 105 is substantially circular, however the vessel 105 can be a number of shapes, see for example the various exemplary vessels shown in FIG. 3.

Referring still to FIGS. 1 and 2, the cookware 100 includes a removable handle assembly, referred to as removable handle 110. The removable handle 110 includes a bracket 115 and a handle 150. The bracket 115 is coupled to the vessel 105. The bracket 115 can be fastened, welded, glued, or otherwise coupled to the vessel 105. The handle 150 is selectively couplable to the bracket, such that the handle 150 can be coupled and decoupled from the vessel 105. FIG. 1 illustrates the handle 150 coupled to the bracket 115 and FIG. 2 illustrates the handle 150 decouple from the bracket 115.

Referring now to FIG. 3, the cookware 100 is shown with various different vessels 305, 310, and 315, according to an exemplary embodiment. The various vessels 305-315 each include a bracket 115 to allow them to couple to a handle 150. While three handles 150 are shown, a single handle 150 can be used to couple to each vessel 305-315 individually. Vessel 305 is a pot and includes a lid 307 and a plurality of drop handles 309. The drop handles 309 are coupled to the bracket 115. In some embodiments, a vessel, such as vessels 305-315, is couple to a plurality of brackets to allow a user to attach the handle 150 at a number of different locations on the vessel. Vessel 310 is shown as a pan with a lid 312. Vessel 315 is shown as a griddle. While only vessels 305-315 are shown, it should be understand that vessels of other sizes, types, and shapes can also be used with the removable handle 110.

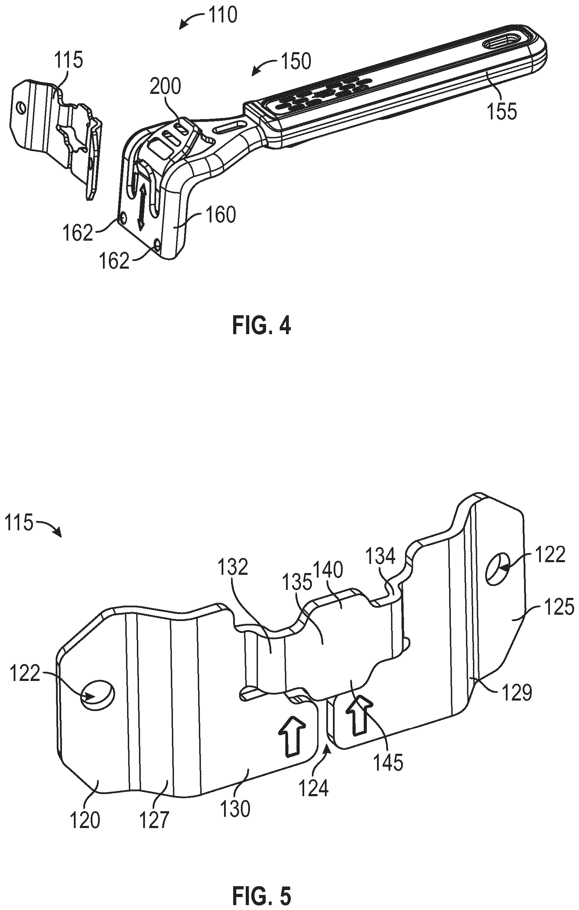

Referring now to FIG. 4, an exploded view of the removable handle 110 is shown, according to an exemplary embodiment. The removable handle 110 includes a bracket 115 and a handle 150. The handle 150 can include a holding section 155. Holding section 155 is be over molded in silicon rubber to provide a safe place for a user to grip the handle 150. In some embodiments, the holding section 155 is covered or made of another material such as wood, rubber, metal, or plastic. The handle 150 is shown to include an attachment interface 160 and a release tab 200. The release tab 200 is fastened to the attachment interface 160 via a plurality of fasteners, shown as rivets 162. In some embodiments, the release tab 200 can be integral with the attachment interface 160. In some embodiments, the release tab 200 can be welded, glued, screwed, or otherwise coupled to the attachment interface 160.

Referring now to FIG. 5, the bracket 115 is shown, according to an exemplary embodiment. The bracket includes a first end 120 and a second end 125. Each of the first end 120 and the second end 125 include an aperture 122 for receiving a fastener to couple the bracket 115 to a vessel (e.g., vessel 105, vessel 305, vessel 310, vessel 315, etc.). The first end 120 and the second end 125 lie along a curved plane. In some embodiments, the radius of curvature of the curved plane of the first end 120 and the second end 125 is the same or substantially similar to the radius of curvature of the vessel the bracket 115 is to be coupled to. In some embodiments, the first end 120 and the second end 125 line within the same flat plane.

Still referring to FIG. 5, the bracket 115 includes a middle section 130 between the first end 120 and the second end 125. The middle section 130 protrudes and lies within a plane offset from the plane of the first end 120 and the second end 125 due to bends 127, 129. As such, the middle section 130 is extended radially in a direction away from where the bracket 115 would contact a vessel. The middle section 130 includes a notch 124 and a bridge 135. The bridge 135 extends across the middle section 130, between the first end 120 and the second end 125. In some embodiments, the notch 124 is excluded.

The bridge 135 protrudes from the middle section 130 due to bends 132, 134 and lies within a plane offset from the plane of middle section 130 and the plane of the first end 120 and the second end 125. The bridge 135 thereby extends further away radially in a direction away from where the bracket 115 would contact a vessel, such that the bridge 135 is the outmost radially extending segment of the bracket 115. The bridge 135 is coupled to the middle section 130 at its lateral ends via bends 132, 134. In some embodiments, the bridge 135 is alternatively coupled at a top and a bottom of the bridge 135. The bridge 135 is shown extending across the notch 124 to couple the first end 120 to the second end 125. In some embodiments, the notch 124 is excluded such that the first end 120 and the second end 125 are coupled across the bridge 135 in addition to one or more other portions of the middle section 130.

The span of the bridge 135 includes an upper extension 140 and a lower extension 145 extending from a top and a bottom of the bridge, respectively. The bridge 135, including the upper extension 140 and the lower extension 145, thereby forms or substantially forms a cross-shaped section. The bridge 135 can include additional or fewer extensions, for example only one of the upper extension 140 or the lower extension 145, and form other shapes without departing from the scope of the invention.

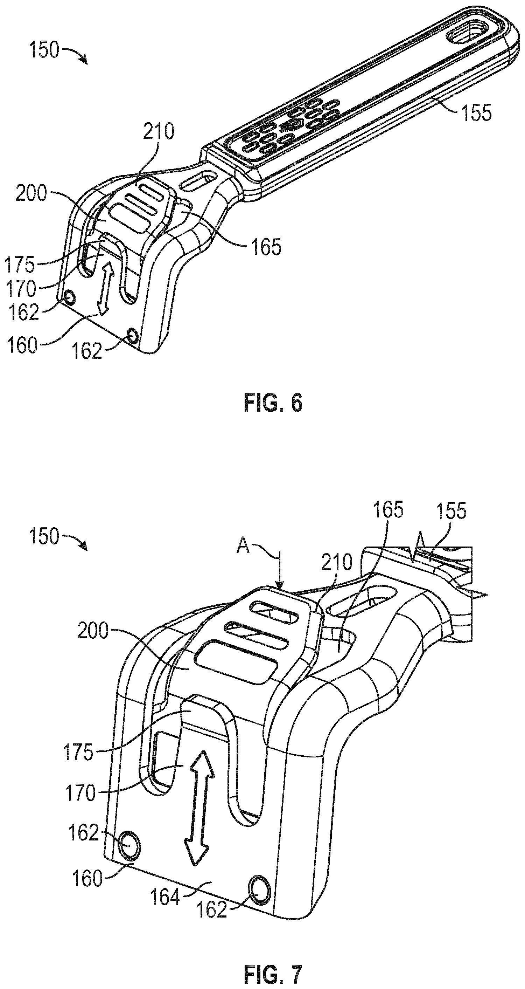

Referring now to FIGS. 6-9, the handle 150 is shown, according to an exemplary embodiment. The handle 150 includes an attachment interface 160 and a release tab 200. The release tab 200 is coupled to the attachment interface 160 via a plurality of rivets 162, however the release tab 200 may be integral with or otherwise coupled to the attachment interface 160 (e.g., with screws, by welding, with glue, etc.). The attachment interface 160 is positioned at an angle relative to the longitudinal direction of the holding section 155. In some embodiments, the angle between the attachment interface 160 and the holding section 155 is equal to or greater than 90 degrees. The attachment interface 160 is integral with the holding section 155, however in some embodiments the attachment interface 160 and holding section 155 are individual pieces which are coupled together.

The attachment interface 160 includes a central aperture or opening, shown as gap 165. Extending partially within the gap 165 is an extension or protrusion, shown as alignment tab 170. The alignment tab 170 extends from the attachment interface 160 substantially vertically upwards at least partially into the gap 165. The alignment tab 170 is narrower than the gap 165 such portions of the gap 165 extend on either side of the alignment tab 170. The alignment tab 170 includes a slanted tip, shown as tip 175. Tip 175 is angled away from the holding section 155 and a face of the attachment interface 160.

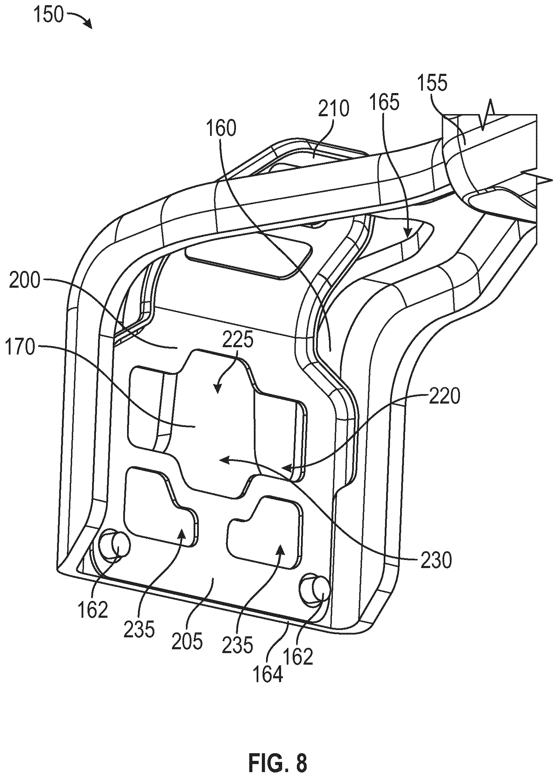

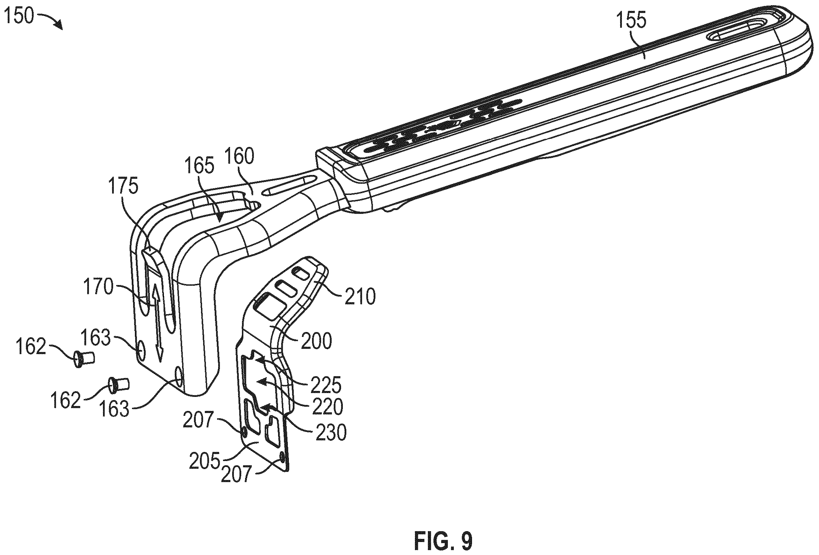

Referring specifically to FIGS. 8 and 9, the handle 150 includes a release tab 200 coupled to the attachment interface 160. The release tab 200 is coupled at a bottom 205 of the release tab 200 to a bottom 164 of the attachment interface 160 by the plurality of fasteners, shown as rivets 162, such that a top 210 of the release tab 200 acts a lever around the coupling at the bottom 205. The plurality of fasteners, shown as rivets 162, extend through apertures 163 of the attachment interface 160 and apertures 207 of the release tab 200. The release tab 200 includes a central aperture or void, shown as catch 220. Catch 220 is shown to include an upper section 225 and a lower section 230 such that the catch 220 matches or substantially matches the shape of bridge 135

Referring again to FIGS. 6-9, the release tab 200 extends upward through the gap 165. The release tab 200 extends substantially parallel with the alignment tab 170 until the top 210 of the release tab, which is angled away from the alignment tab 170 and towards the holding section 155. In some embodiments, alignment tab 170 and the release tab 200 may contact proximate the beginning or bend of the tip 175. In some embodiments, alignment tab 170 are positioned adjacent but not in contact with each other. The angle or curve between the bottom 205 and the top 210 of the release tab 200 facilitates a moment arm effect around the bottom 205. Force applied downward, shown as direction D, on the top 210 results in a flexure of the release tab 200 and rotation of the top 210 away from alignment tab 170.

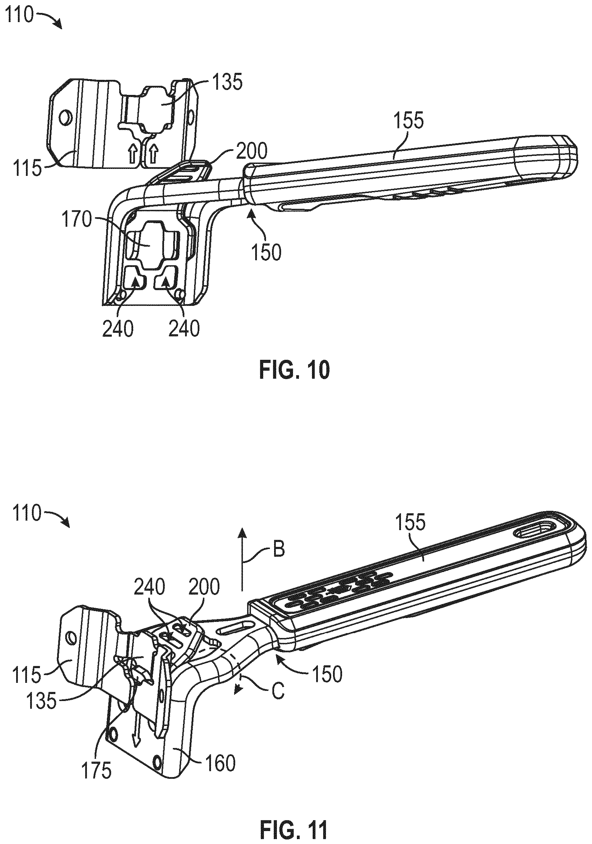

Referring to FIGS. 10-13, the coupling of the bracket 115 to the handle 150 is shown, according to an exemplary embodiment. Referring first to FIG. 10, the handle 150 is positioned below the bracket 115, which for the purposes of FIGS. 10-13 is considered fixed in space (i.e., stationary). Referring now to FIG. 11, the handle 150 is moved upwards in direction B. As the handle 150 moves upwards, the tip 175 of the alignment tab 170 engages with the bridge 135 of the bracket 115. The tip 175 is slanted or angle slightly outwards, towards the bracket 115, to facilitate alignment and insertion of the bridge 135 between the alignment tab 170 and the release tab 200. As the handle 150 continues to move upwards, the bracket 115 continues to move between the alignment tab 170 and the release tab 200, engaging with the release tab 200 and causing it to flex backwards along path C away from the bracket 115. The alignment tab 170 has first stiffness (i.e., a modulus of elasticity) and the release tab 200 has a second stiffness that is less than the first stiffness, such that as the bridge 135 passes between the alignment tab 170 and the release tab 200, it cause the release tab 200 to flex, bend, or otherwise elastically deform and move more than the alignment tab 170. In some embodiments, the alignment tab 170 has a thickness greater than a thickness of the release tab 200. In some embodiments, the alignment tab 170 is made of a stiffer material or otherwise shaped to increase its stiffness relative to the release tab 200. In some embodiments, the release tab 200 includes a number of additional apertures or holes, shown as cutouts 240, to decrease the stiffness of the release tab 200.

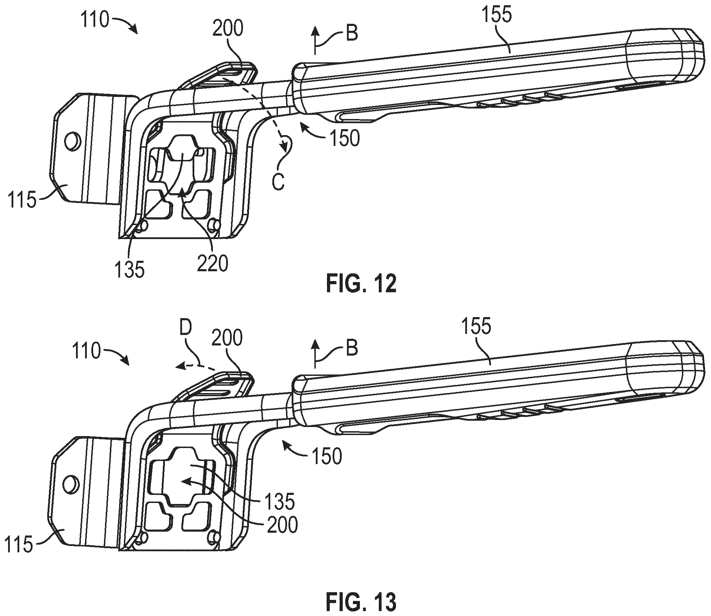

Referring to FIGS. 12 and 13, as the handle moves upwards in direction B the catch 220 of the release tab 200 moves closer to alignment with the bridge 135, until, as shown in FIG. 13, the catch 220 is aligned with the bridge 135 such that the bridge 135 extends at least partially into the catch 220 and the release tab 200 snaps back along path D into a relaxed or unstressed state. Referring specifically to FIG. 13, the removable handle 110 is shown in a relaxed or unstressed state (i.e., a secure position). The bridge 135 extends into the catch 220, and the outer perimeter shape of the catch 220 is substantially the same as the shape of the bridge 135, such that the edges of the bridge 135 can engage or contact the interior edges of the catch 220. The upper extension 140 and the lower extension 145 provide additional lateral support to secure the handle 150 relative to the bracket 115. The stiffness of the alignment tab 170 and the release tab 200 provide a compressive force on the bridge 135 of the bracket 115 to retain the bridge 135 within the catch 220. In turn, the bridge 135 and its engagement with the inner surfaces of the catch 220 acts to prevent twisting of the handle 150 relative to the bracket 115.

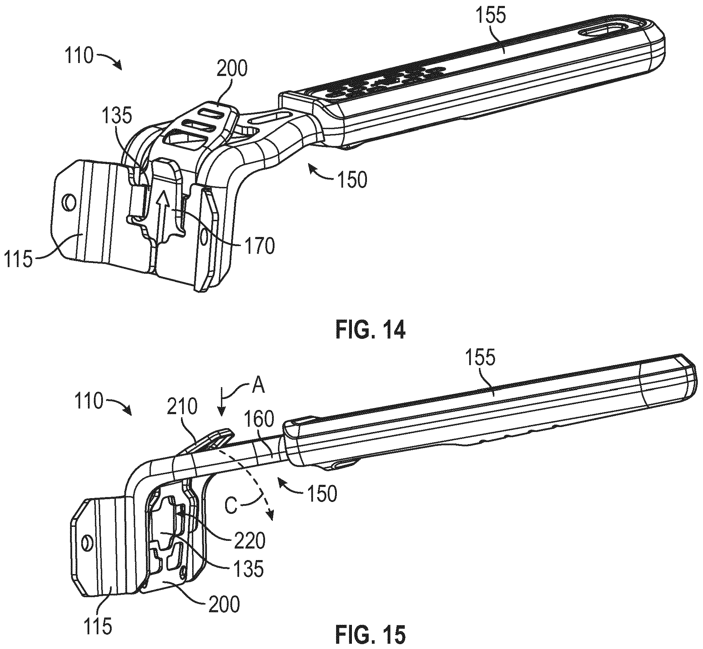

Referring now FIGS. 14-17, the decoupling of the bracket 115 from the handle 150 is shown, according to an exemplary embodiment. Referring first to FIG. 14, the removable handle assembly is shown in the secure position, wherein the alignment tab 170 and the release tab 200 are in a relaxed or substantially relaxed and substantially unstressed state. FIG. 14 is a front view of the removable handle 110 shown in FIG. 13.

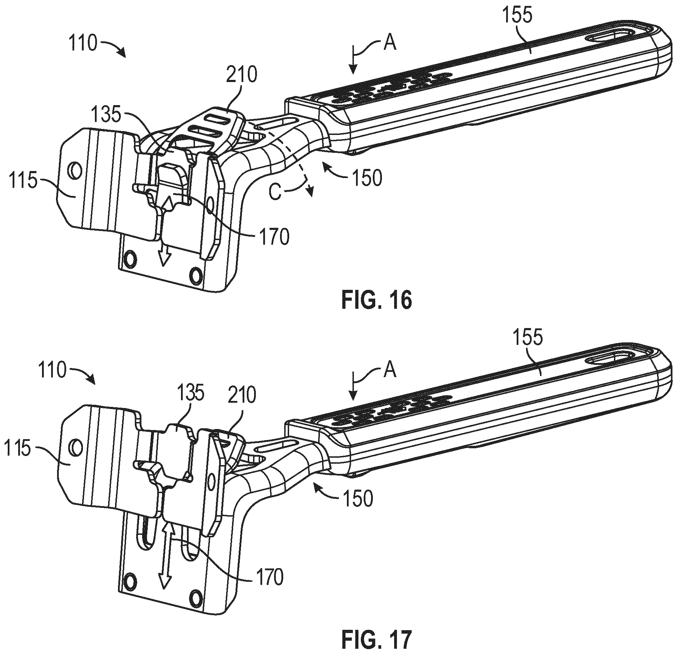

Referring now to FIG. 15, the removably handle assembly is shown in a transition or release position, according to an exemplary embodiment. In operation, a user desiring to remove the handle 150 from the bracket 115 exerts a force in direction A onto the top 210 of the release tab 200. The force causes the release tab to flex or move along path C, such that the catch 220 disengages at least partially from the bridge 135. The upper extension 140 of the bridge 135 is freed from the catch 220, thereby allowing the handle 150 to move down and release the bracket 115, as shown in FIGS. 16 and17.

Referring now to FIGS. 16 and 17, the handle 150 moves down in the direction A away from the bracket 115. Due to the flex or movement of the release tab 200, the bridge 135 is released from the catch and passes up through the alignment tab 170 and the release tab 200 until the bracket 115 is separated from the attachment interface 160 of the handle 150.

As utilized herein, the terms "approximately," "about," "substantially", and similar terms are intended to have a broad meaning in harmony with the common and accepted usage by those of ordinary skill in the art to which the subject matter of this disclosure pertains, and mean +/-10% from the given value or direction. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

The term "or," as used herein, is used in its inclusive sense (and not in its exclusive sense) so that when used to connect a list of elements, the term "or" means one, some, or all of the elements in the list. Language such as the phrases "at least one of X, Y, and Z" and "at least one of X, Y, or Z," unless specifically stated otherwise, are understood to convey that an element may be either X; Y; Z; X and Y; X and Z; Y and Z; or X, Y, and Z (i.e., any combination of X, Y, and Z). Thus, such language is not generally intended to imply that certain embodiments require at least one of X, at least one of Y, and at least one of Z to each be present, unless otherwise indicated.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

It is important to note that the construction and arrangement of the cookware 100 and the removable handle 110 as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, some elements shown as integrally formed may be constructed from multiple parts or elements, the position of elements may be reversed or otherwise varied and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions and arrangement of the exemplary embodiments without departing from the scope of the present disclosure.

## Claims

1. Cookware, comprising:
a cooking vessel;
a bracket coupled to the cooking vessel, the bracket including:
a bracket body; and
a bridge coupled to the bracket body and extending away from the cooking vessel, the bridge defining a slot; and
a handle removably coupled to the bracket, the handle including:
a handle body;
a release tab coupled to the handle body and configured to move between a secure position and a release position, wherein moving the release tab to the release position causes the release tab to disengage the bridge to decouple the handle from the bracket.

2. The cookware of claim 1, wherein the bridge further comprises an upper extension and a lower extension, and wherein moving the release tab between the secure position to the release position causes the release tab to disengage the upper extension to decouple the handle from the bracket.

3. The cookware of claim 1 or 2, wherein the release tab further comprises a catch to receive the bridge in the secure position.

4. The cookware of any of claims 1 to 3, wherein the handle further comprises an alignment tab coupled to the handle body adjacent the release tab.

5. The cookware of claim 4, wherein in the secure position the bridge is positioned between the alignment tab and the release tab.

6. The cookware of claim 4 or 5, wherein the alignment tab engages with the bridge to position the bridge within a catch of the release tab, preferably wherein moving the release tab to the release position comprises moving the release tab relative to the alignment tab remove the bridge from the catch to decouple the handle from the bracket.

7. A removeable handle for use with cookware comprising, comprising:
a bracket including:
a bracket body; and
a bridge extending away from the bracket body and defining a slot; and
the handle including:
a handle body;
a release tab including a catch and movable relative to the handle body between a secure position and a release position; and
an alignment tab extending across the catch,
wherein in the secure position the alignment tab extends through the slot such that the bridge is positioned between the alignment tab and the release tab and the bridge engages with the catch to couple the handle to the bracket, and in the release position the catch disengages the bridge to decouple the handle from the bracket.

8. The removable handle of claim 7, wherein the handle is removably coupled to the bracket.

9. The removeable handle of claim 7 or 8, wherein the bridge further comprises an upper extension and a lower extension, and wherein moving the release tab between the secure position to the release position causes the catch to disengage the upper extension to decouple the handle from the bracket.

10. The removable handle of any of claims 7 to 9, wherein a span of the bridge is substantially cross-shaped and the catch is substantially cross-shaped to receive the span.

11. The removable handle of any of claims 7 to 10, wherein the release tab elastically deforms to move between the secure position and the release position.

12. The removable handle of any of claims 7 to 11, wherein the alignment tab has a first stiffness and the release tab has a second stiffness less than the first stiffness.

13. The removable handle of any of claims 7 to 12, wherein the bracket body comprises a first half and a second half, the bridge extending between the first half and the second half.

14. The removable handle of any of claims 7 to 13, wherein the bracket body further comprises:
a first end opposite a second end; and
a middle section extending between the first end and the second end and protruding out away from the first end and the second end,
wherein the bridge extends within the middle section.

15. A cookware kit, comprising:
a plurality of cooking vessels;
a plurality of brackets, wherein each of the plurality of brackets is coupled to one of the plurality of cooking vessels, each bracket including:
a bracket body; and
a bridge extending away from the bracket body and defining a slot; and
a handle including:
a handle body;
a release tab including a catch and movable relative to the handle body between a secure position and a release position; and
an alignment tab extending across the catch,
wherein in the secure position the alignment tab extends through the slot such that the bridge is positioned between the alignment tab and the release tab and the bridge engages with the catch to couple the handle to the bracket, and in the release position the catch disengages the bridge to decouple the handle from the bracket.
